# EUROPEAN PATENT APPLICATION

(11) **EP 4 737 940 A2**
(43) Date of publication of application: **06.05.2026**
(21) Application number: 25207396.0
(22) Date of filing: 08.10.2025
(51) Int. Cl.: G01S 7/41, G01S 7/42, G01S 7/295, G01S 13/931

(54) **RADAR SYSTEM FOR DIFFERENTIATING OBJECTS BY MEANS OF TWO DIFFERENTLY TRAINED NEURAL NETWORKS USING TWO DIFFERENT DATA PROCESSING ALGORITHMS FOR CALCULATING INPUT DATA FOR THE NEURAL NETWORKS ON THE BASIS OF RECEIVED RADAR SIGNALS**

(30) Priority: 14.10.2024 DE 102024129643
(71) Applicant: Valeo Schalter und Sensoren GmbH, 74321 Bietigheim-Bissingen (DE)
(72) Inventor: KUMAR, Sandeep, 96317 Kronach Neuses (DE); SCHOLZ, Niko, 96317 Kronach Neuses (DE); POEPPERL, Maximilian, 96317 Kronach Neuses (DE); LUKIN, Artem, 96317 Kronach Neuses (DE); JENKINS, Alan, 96317 Kronach Neuses (DE)
(74) Representative: Valeo Schalter und Sensoren

(57) **Abstract**

Disclosed is a Radar system (3) for differentiating objects (61, 62) in an environment (140) of a vehicle (40), the radar system (3) comprising an evaluation unit (4), wherein the evaluation unit (4) comprises two differently trained neural networks (1, 2) and is configured to:
- generate first input data (101) by means of a first data processing algorithm and dependent on receiving signals (100),
- generate second input data (102) by means of a second data processing algorithm and dependent on the receiving signals (100), wherein the first data processing algorithm is different from the second data processing algorithm,
- input the first input data (101) into a first one of the neural networks and in response receive from the first neural network (1) a first output (111),
- input the second input data (102) into a second one of the neural networks and in response receive from the second neural network (2) a second output (112),
generate an output (800) dependent on the first output (111) and the second output (112), the output (800) indicating a differentiation between the objects (61, 62).

## Description

### FIELD OF THE INVENTION

The invention relates to a radar system. Furthermore, the invention relates to a method for operating a radar system.

### BACKGROUND

DE 10 2020 201 025 A1 describes a radar sensor with several receiving antennas and several transmitting antennas arranged on a printed circuit board. A large proportion of the transmitting antennas are arranged at different positions with respect to a first axis and at the same position with respect to a second axis orthogonal to the first axis. A proportion of the receiving antennas are arranged at different positions with respect to the first axis and at the same position with respect to the second axis.

### SUMMARY OF THE INVENTION

It is an objective to provide an improved radar system for differentiating objects in an environment of a vehicle and an improved method for operating a radar system for detecting objects in an environment of a vehicle.

The objectives underlying the invention are solved by the features of the independent claims.

In one aspect a radar system for differentiating objects in an environment of a vehicle is disclosed. The radar system comprises an evaluation unit. The evaluation unit comprises two differently trained neural networks and is configured to generate first input data by means of a first data processing algorithm. In addition, the evaluation unit is configured to generate the first input data dependent on receiving signals generated by means of received radar signals.

Furthermore, the evaluation unit is configured to generate second input data by means of a second data processing algorithm and dependent on the receiving signals. The first data processing algorithm is different from the second data processing algorithm.

Furthermore, the evaluation unit is configured to input the first input data into a first one of the neural networks and in response receive from the first neural network a first output. The first output indicates a differentiation between the objects.

Furthermore, the evaluation unit is configured to input the second input data into a second one of the neural networks and in response receive from the second neural network a second output. The second output indicates a differentiation between the objects.

Furthermore, the evaluation unit is configured to generate an output dependent on the first output and the second output. The output indicates a differentiation between the objects.

In another aspect a method for operating a radar system for detecting objects in an environment of a vehicle is disclosed. The radar system comprises an evaluation unit, wherein the evaluation unit comprises two differently trained neural networks. The method comprises:
- generating first input data by means of a first data processing algorithm and dependent on receiving signals generated by means of received radar signals,
- generating second input data by means of a second data processing algorithm and dependent on the receiving signals, wherein the first data processing algorithm is different from the second data processing algorithm,
- inputting the first input data into a first one of the neural networks and in response receiving from the first neural network a first output, the first output indicating a differentiation between the objects,
- inputting the second input data into a second one of the neural networks and in response receiving from the second neural network a second output, the second output indicating a differentiation between the objects,
- generating an output dependent on the first output and the second output, the output indicating a differentiation between the objects.

In another aspect a computer program is disclosed. The computer program comprises machine executable instructions for execution by a computational system, wherein execution of the machine executable instructions causes the computational system to perform the method for operating the radar system for detecting objects in the environment of the vehicle.

### BRIEF DESCRIPTION OF THE DRAWINGS

In the following, examples are described in greater detail making reference to the drawings in which:
Fig. 1 is a schematic of an a radar system comprising an evaluation unit with a first and a second neural network,
Fig. 2 is a flow chart for describing a data flow within the evaluation unit shown in Fig. 1,
Fig. 3 depicts the radar system shown in Figure 1 with receiving antennas,
Fig. 4 depicts an exemplary range-Doppler power spectrum generated dependent on receiving signals generated by means of one of the receiving antennas shown in Figure 3,
Fig. 5 illustrates an application example of the radar system shown in Figure 1 in a traffic situation of a vehicle comprising two objects in an environment of the vehicle,
Fig. 6 depicts a dataflow indicating a computation of a spatial Fourier transform of phase information provided by power spectra generated on the basis of a set of receiving signals generated by means of the receiving antennas shown in Figure 3,
Fig. 7 shows an example of an output of the evaluation unit for differentiating the objects shown in Figure 5,
Fig. 8 shows an example of a first output of the first neural network shown in Figure 1 for differentiating the objects shown in Figure 5,
Fig. 9 shows an example of a second output of the second neural network shown in Figure 1 for differentiating the objects shown in Figure 5,
Fig. 10 depicts a first variant of an input of the first or the second neural network shown in Figure 1 in the form of a two-channel image;
Fig. 11 depicts a second variant of an input of the first or the second neural network shown in Figure 1 in the form of a three-channel image;
Fig. 12 depicts a third variant of an input of the first or the second neural network shown in Figure 1 in the form of a four-channel image;
Fig. 13 illustrates a dataflow indicating an interdependent training between the first neural network and the second neural network shown in Figure 1.

### DETAILED DESCRIPTION

As the two networks are trained differently and the evaluation unit is configured to generate the first input data by means of the first data processing algorithm and to generate the second input data by means of the second data processing algorithm and the first algorithm is different from the second algorithm, the radar system could use information provided by the receiving signals in at least two different manners for the differentiation between the objects, in the following also referred to as differentiation. This may allow to differentiate the objects more reliable.

Using two different data processing algorithms may allow to extract more information of the receiving signals compared to using only one data processing algorithm for extracting information from the receiving signals. Generally, a data processing algorithm may compress information. Thus, the evaluation unit may be configured to compress the information of the receiving signals by performing the first data processing algorithm resulting in the first input data. Similarly, the evaluation unit may be configured to compress the information of the receiving signals by performing the second data processing algorithm resulting in the second input data. As the evaluation unit is configured to generate the output dependent on the first and second output and therefore on the basis of the first and the second input data, the output is generated using more than one kind of compressed data of the receiving signals, namely the first and the second input data. This might result in a more accurate differentiating of the objects because more information of the receiving signals may be used for generating the output compared to using just the one kind of compressed data, for example using only the first or only the second input data.

In addition, the first and second input data may be different and weigh at least a part of the information of the receiving signals differently. This may allow to use different criteria for differentiating the objects based on the receiving signals. Generally, the more criteria for differentiating the objects are used, the more reliable a result of the differentiating may be. By that a safety of the radar system may be enhanced.

In one example, the first NN may be configured to differentiate the objects based on a first feature, which may be considered as a first criteria. In one example, the first NN may be designed to differentiate the objects based on the first feature using the first input data. In one example, the first input data may comprise first data which may be required for differentiating the objects based on the first feature by means of the first NN.

Analogously, the second NN may be configured to differentiate the objects based on a second feature, which may be considered as a second criteria and may be different to the first feature. In one example, the second NN may be designed to differentiate the objects based on the second feature dependent on the second input data. In one example, the second input data may comprise second data which may be required for differentiating the objects based on the second feature by means of the second NN. Using the two different features, i.e. the first and the second feature, for the differentiating may be considered as using two different criteria for the differentiating.

The two differently trained neural networks may be considered as two different tools for processing at least a part, particularly a compressed part, of the information of the receiving signals, and in particular for processing two different input data such as the first and the second input data. The phrase "differently trained" may involve trained with different training data. Thus, the first neural network (NN) may be trained with first training data and the second NN may be trained with second training data. Such a different training of the two NNs may provoke that the first NN is configured to differentiate the objects based on the first feature and the second NN is configured to differentiate the objects based on the second feature.

In one example, using the two different NNs may be advantageous in a traffic situation of the vehicle in which either the first neural network (NN) or the second NN may perform better in differentiating the objects. In one example, the evaluation unit may be configured to generate the output by selecting either the first output or the second output depending on a score of the first output and a score of the second output. The NNs may be configured to generate their outputs such that the first output comprises a first score indicating a confidence value of the first output and the second output comprises a second score indicating a confidence value of the second output.

In addition, the proposed radar system may allow to make use of advantages of the first NN and advantages of the second NN in a combined manner. For example, the first NN may be trained such that the first NN is able to detect a first part of the traffic situation better than the second NN and the second NN may be trained such that the second NN is able to detect a second part of the traffic situation better than the first NN. In one example, detecting the first part of the traffic situation may involve detecting a first set of further vehicles in a first region in front of the vehicle and detecting the second part of the traffic situation may involve detecting a second set of further vehicles in a second region in front of the vehicle. Following this example, the first NN may perform better in detecting the first set of further vehicles because the first training data may comprise more training objects in the first region than in the second region. Analogously, the second NN may perform better in detecting the second set of further vehicles because the second training data may comprise more training objects in the second region than in the first region.

In one example, the first data processing algorithm may be designed to process the receiving signals such that a direction of the highest sensitivity of the radar system is directed to the first region. Analogously, the second data processing algorithm may be designed to process the receiving signals such that a direction of the highest sensitivity of the radar system is directed to the second region.

The indication of the first output and the second output and of the output with respect to the differentiation between the objects may indicate a relative position of the respective object with respect to the radar system. For example, the first output and the second output and the output may comprise probability values of subregions of a region in the environment of the vehicle. The probability values which are greater than a given threshold may each indicate a probability for a respected presumed object located in the respective subregion. The objects may comprise a set of the presumed objects in this case. In one example, the output may be considered as an output of the evaluation unit. The evaluation unit may be coupled to a vehicle control unit and may be configured to send the output to the vehicle control unit. The vehicle control unit may be designed to control a vehicle component, for example a steering system or a propulsion system, dependent on the output of the evaluation unit. In another example, the evaluation unit may be configured to control the vehicle component dependent on the output. In this case, the evaluation unit may be designed in the form of a vehicle control unit.

In one example, a type of the first input data may be different compared to a type of the second input data. According to this example, the first NN and the second NN may comprise a different structure. In one example, a structure of the first NN and of the second NN may be each specified by an internal structure and/or an external structure. The internal structure may be specified by a number of hidden layers or by a type of layers. Type of layers may involve a pooling layer, a convolutional layer or a feedforward layer used in a Multi-layer perceptron NN. The external structure may be specified by a number of input neurons and a type of numbers which may be processable by the input neurons. Thus, in one example, the first NN may be designed to process a different type of input data compared to the second NN. For example, the first NN may be designed to process real numbers as input numbers and the second NN may be designed to process complex numbers as inputs or vice versa.

The difference between the type of the first input data and the type of the second input data may allow a higher flexibility in choosing and/or designing the first and second data processing algorithm differently. This may allow that the first NN and the second NN may be designed to differentiate the objects on a higher number of different features. This may be due to the fact that a difference in information given by the first input data compared to the second input data may be greater in case the type of the first input data is different compared to the type of the second input data.

In one example, the evaluation unit may be configured to generate digitalized and filtered data, in the following also referred to as raw data, dependent on the receiving signals. According to this example, the evaluation unit may further be configured to generate a 2-dimensional power spectrum dependent on the raw data. A first dimension of the power spectrum may represent first frequencies which relate to distances of the objects with respect to the radar system. A second dimension of the power spectrum may represent second frequencies which relate to relative velocities of the objects with respect to the radar system. The first input data may comprise data derived from the 2-dimensional power spectrum. In one example, the second input data may comprise the raw data.

The power spectrum may associate a respective pair of one of the first frequencies and one of the second frequencies of the power spectrum to an intensity value and a phase information. The evaluation unit may be configured to generate the 2-dimensional power spectrum, and in particular to calculate the intensity value and the phase information of the respective pair, by performing a Fourier transformation of the raw data.

The data derived from the 2-dimensional power spectrum may involve data which is selected from data of the spectrum, such as the data of the pairs, or data which is calculated dependent on the data of the spectrum. This may involve that the first input data comprises the intensity values and/or the phase information of the pairs or further data which is calculated based on the intensity values and/or the phase information of the pairs.

The advantage of the first input data comprising the data derived from the 2-dimensional power spectrum is that by that the first input data may comprise information about the distances of the objects and the relative velocities of the objects with respect to the radar system. Hence, the first NN does not need to perform any inference with respect to estimating the distances and the relative velocities of the objects. In addition, generating the 2-dimensional power spectrum may be considered as a transparent process to gain information about the distances and the relative velocities. Thus, information given by the 2-dimensional power spectrum may be considered as reliable information. Using this reliable information by inputting the first input data into the first NN may enhance an accuracy of the first output. In one example, the first NN may be designed to perform an angle estimation based on the first input data. The angle estimation may provide an azimuth and an elevation angle of the respective object with respect to the radar system.

In case the second input data comprises the raw data, the second input data may not contain data derived from the power spectrum. On the one hand, the second NN may not be designed to compute the second output dependent on information with respect to the distances and relative velocities of the objects given in the form of input data to the second NN in this case. However, the second NN may be trained to compute internal values of the second NN representing the distances and relative velocities of the objects dependent on the second input data comprising the raw data, in the following also referred to as internal distance and speed values. Thus, the second NN may be designed to differentiate the objects based on the distances and relative velocities of the objects indirectly.

Moreover, the second NN may be trained to compute further internal values representing an acceleration of the respective object dependent on the raw data, in the following also referred to as internal acceleration values. In this case the second NN may be designed to differentiate the objects with respect to the acceleration of the respective object, in particular in addition to the distances and relative velocities of the objects. Whereas the internal distance and speed values may not represent the distances and relative velocities of the objects in the same accuracy as the first and second frequencies in one example, an additional information provided by the internal acceleration values may lead to a higher accuracy of the second output with respect to the differentiation compared to the first output in some traffic situations. Such traffic situation may involve comparatively high accelerations of the objects with respect to the radar system.

The above mentioned acceleration of the respective object may involve a relative acceleration of the respective object with respect to the radar system. Alternatively or in addition, the acceleration of the respective object may involve a relative acceleration of the respective object to one or more other objects of the objects.

In one example, the evaluation unit may be configured to generate power spectra dependent on the receiving signals. The receiving signals may be received from a set of receiving antennas. First frequencies of each power spectrum may relate to distances of the objects with respect to the set of receiving antennas and second frequencies of each power spectrum may relate to relative velocities of the objects with respect to the set of receiving antennas.

Furthermore, the evaluation unit may be configured to select a pair of frequencies for each power spectrum. Each pair of frequencies may comprise the same frequency of the first frequencies and the same frequency of the second frequencies of the power spectra. Each power spectrum may comprise a phase information of the selected pair of the respective power spectrum.

Furthermore, the evaluation unit may be configured to perform a spatial Fourier transform on the basis of the phase information of the selected pairs of frequencies. The result of the spatial Fourier transform may comprise first spatial frequencies and second spatial frequencies, wherein the first spatial frequencies and the second spatial frequencies may be associated to each other in the form of pairs of spatial frequencies. To each pair of spatial frequencies one of the first spatial frequencies, one of the second spatial frequencies and an intensity information and a phase information may be associated. The result of the spatial Fourier transform may comprise a respective association of the respective intensity information and the respective phase information to the respective pair of spatial frequencies.

The result of the spatial Fourier transform may be in the form of a spatial 2D-spectrum. A first dimension of the spatial 2D-spectrum may be represented by the first spatial frequencies and a second dimension of the spatial 2D-spectrum may be represented by the second spatial frequencies. The spatial 2D-spectrum may assign to each pair of spatial frequencies the respective intensity information and phase information. By that, to each pair of spatial frequencies the respective intensity information and phase information may associated by means of the spatial 2D-spectrum. The spatial 2D-spectrum may be considered as a 2D-function, wherein different frequencies of the first frequencies may represent different values of a first argument of the 2D-function and different frequencies of the second frequencies may represent different values of a second argument of the 2D-function. Thus, each pair of values of the first and second argument may represent the respective pair of spatial frequencies. To each pair of values of the first and second argument a respective set of function values is assigned by the 2D-function. The respective set of function values may comprise the respective intensity information and phase information of the respective pair of spatial frequencies which is represented by the respective pair of values of the first and second argument.

Furthermore, the evaluation unit may be configured to generate the first input data in the form of a first image comprising first pixels. Each first pixel may represent one respective pair of spatial frequencies of the pairs of spatial frequencies and may comprise a set of pixel values. The pixel values may represent different channels of the first pixel. For the respective pair of spatial frequencies, the pixel values may depend on the intensity information and the phase information of the respective pair of spatial frequencies. In one example, the evaluation unit may be configured to determine the pixel values of the set of pixel values of the respective first pixel dependent on the intensity information and the phase information of the respective pair of spatial frequencies which is represented by the respective first pixel. In this case, the evaluation unit may be configured to set a first pixel value of the set of pixel values of the respective first pixel equal to the intensity information and a second pixel value of the set of pixel values of the respective first pixel equal to the phase information of the respective pair of spatial frequencies which is represented by the respective first pixel.

The radar system may comprise a control unit for controlling a set of transmitting antennas to send a set of radar signals dependent on a set of control signals. The respective transmitting antenna of the set of transmitting antennas may send the respective radar signal of the set of radar signals dependent on the respective control signal of the set of control signals. In one example, the control signals of the set of control signals may differ from each other, for example with respect to their phase.

The radar system may comprise the set of receiving antennas. In one example, the receiving signals may comprise a set of receiving signals. A respective receiving antenna of the set of receiving antennas may be configured to generate a respective receiving signal of the set of receiving signals in response to receiving a set of reflected radar signals. The set of reflected radar signals may be the above mentioned received radar signals. The set of reflected radar signals may result from reflections of the set of radar signals at the objects. In one example, a respective reflected radar signal of the set of reflected radar signals may result from reflections of the set of radar signals at the respective object.

The control unit may be arranged to operate the set of transmitting antennas and the set of receiving antennas in a MIMO-mode (Multiple Input/Multiple Output mode). An operation of the set of transmitting antennas and the set of receiving antennas in the MIMO-mode may involve that each receiving antenna of the set of receiving antennas receives the set of reflected radar signals and that the radar signals of the set of reflected radar signals may be distinguishable by the evaluation unit. To realize this, the control unit may be designed to generate the set of control signals as coded signals. The control unit may be configured to perform a time-division multiplex method and/or using a binary phase modulation for coding the set of control signals and by that the set of radar signals. The coding may enable the evaluation unit to distinguish the different receiving signals of the set of receiving signals from each other and by that the radar signals of the set of reflected radar signals from each other when processing the set of receiving signals.

The MIMO method may be used to generate a virtual antenna array with virtual receiving antennas, also referred to as virtual channels in the following. Distances between the virtual receiving antennas within the virtual antenna array may be obtained by performing a convolution of relative distances between the set of transmitting antennas and the set of receiving antennas.

In one example, the radar system may comprise a set of mixing modules. The set of mixing modules may be arranged to mix each control signal of the set of control signals with each receiving signal of the set of receiving signals in order to produce a set of mixed signals within an operating time interval. The set of mixing modules may be generally described as IQ-Demodulators which may be realized in analogue or digital form.

The control unit may be configured to generate the set of control signals such that the set of control signals comprise several chirps within the operating time interval. During a respective chirp a frequency of the respective control signal may increase and start from a starting frequency in each chirp such that the radar system may be operated in the form of an FMCW-radar.

The evaluation unit may be configured to generate the respective power spectrum of the set of power spectra dependent on the respective mixed signal of the set of mixed signals. The evaluation unit may be configured to generate the respective power spectrum by performing a respective Fourier analysis of the respective mixed signal of the set of mixed signals.

The evaluation unit may be configured to generate the respective power spectrum in the form of a 2-dimensional power spectrum. A first dimension of the respective spectrum may represent the first frequencies of the respective spectrum which relate to the distances of the objects mentioned above. A second dimension of the respective spectrum may represent the second frequencies which relate to the relative velocities of the objects mentioned above. The respective spectrum may be considered as a respective range-Doppler-spectrum. Each pair of one of the first frequencies and one of the second frequencies of the respective spectrum may be considered as a respective range-Doppler pair of the respective spectrum.

The respective spectrum may associate a respective power or intensity value and a phase information to each range-Doppler pair of the respective spectrum. The evaluation unit may be designed to compute the power value or the intensity value of each range-Doppler pair of the respective spectrum dependent on an amplitude of the first frequency of the respective range-Doppler pair of the respective spectrum and an amplitude of the second frequency of the respective range-Doppler pair of the respective spectrum.

The phase information of the respective range-Doppler pair of the respective spectrum may relate a phase of a frequency of the respective control signal dependent on which the respective mixed signal is generated to a phase of the frequencies of the respective range-Doppler pair. More precisely, the phase information of the respective range-Doppler pair of the respective spectrum may indicate a respective phase shift between the frequency of the respective control signal dependent on which the respective mixed signal is generated and the phase of the frequencies of the respective range-Doppler pair.

Though the receiving antennas of the set of receiving antennas are spatially separated from each other it is assumed that a respective distance of the respective object of the objects with respect to the respective receiving antenna is equal. This is due to the fact that the distances of the objects with respect to the receiving antennas is much greater than the spacing between the receiving antennas. The same may apply to the relative velocities of the objects. The relative velocities of the objects with respect to the respective receiving antenna may be equal. Hence the power spectra may be similar or equal to each other except for the phase information of the respective range-Doppler pair of the respective spectrum.

The above mentioned selecting of the pair of frequencies for each spectrum may comprise selecting one range-Doppler pair of a selected spectrum of the spectra, in the following referred to as the selected range-Doppler pair. In one example, the selected spectrum may be selected randomly.

In one example, the evaluation unit may be configured to determine the selected range-Doppler pair as the range-Doppler pair of the selected spectrum that comprises the highest power value or intensity value. The evaluation unit may be arranged to search the selected range-Doppler pair and find the selected range-Doppler pair, taking into account a prescribed tolerance, in each spectrum.

This may be due to the fact that the selected range Doppler pair may be selected with respect to the power values or intensity values of the range Doppler pairs and that the spectra may be similar or equal among each other except for the phase information of the range-Doppler pairs.

Thus, the respective spectrum may comprise the selected range-Doppler pair, taking into account the prescribed tolerance. The selected range-Doppler pair of the respective spectrum may be referred to as the respective selected range-Doppler pair in the following.

The above mentioned selecting of the pair of frequencies for each spectrum may comprise a determination, for example a searching and finding, of the respective selected range-Doppler pair. Thus, the selected pair of frequencies of the respective spectrum may be the respective selected range-Doppler pair. Hence, the phase information of the selected pair of frequencies of the respective spectrum may be the phase information of the respective selected range-Doppler pair.

In one example, the evaluation unit may be configured to assemble the phase information of each spectrum in a phase information file and perform the spatial Fourier transform by performing a Fourier transform of the phase information provided by the phase information file in order to generate the result of the spatial Fourier transform.

The first spatial frequencies of the result of the Fourier transform may specify an azimuth angle of presumed subregions of the environment of the vehicle in which the objects may be located. The second spatial frequencies of the result of the Fourier transform may specify an elevation angle of the presumed subregions in which the objects may be located.

To each subregion one respective pair of the pairs of spatial frequencies may be associated. The intensity information which is associated to the respective pair of spatial frequencies may indicate a probability that one of the objects is located in that subregion which is associated to the respective pair of spatial frequencies. The respective intensity information may be in the form of a respective intensity value.

The higher the intensity value of the respective pair of spatial frequencies, the higher a probability may be that one of the objects is located in that subregion which is associated to the respective pair of spatial frequencies. The evaluation unit may be configured to generate the result of the spatial Fourier transform in the form of a 2D-angle spectrum. In this case, each pair of spatial frequencies may be associated to one respective pair of angles. Each pair of angles may comprise one value of a first angle and one value of a second angle. Different values of the first angle may be specified by different frequencies of the first spatial frequencies. The first angle may indicate the azimuth angle of the subregions. Different values of the second angle may be specified by different frequencies of the second spatial frequencies. The second angle may indicate the elevation angle of the subregions. The 2D-angle spectrum may assign the intensity information of the respective pair of spatial frequencies to that pair of angles which is associated to the respective pair of spatial frequencies. Thus, the intensity information of the pairs of angles as well as the intensity information of the pairs of spatial frequencies may allow to differentiate the objects with respect to their azimuth and elevation angle with respect to the radar evaluation system. The 2D-angle spectrum may be visualized in the form of the above mentioned first image.

In this case, each first pixel may represent one of the pairs of angles. Thus, in this case, the first pixels may represent the pairs of the spatial frequencies in an indirect manner in the form of representing the pair of angle which is associated to the respective pair of spatial frequencies. In this case, the evaluation unit may be configured to set the first pixel value of the set of pixel values of the respective first pixel equal to the intensity information and a second pixel value of the set of pixel values of the respective first pixel equal to the phase information of the respective pair of angles which is represented by the respective first pixel.

Though the result of the spatial Fourier transform may already provide information for differentiating the objects, a usage of the fist input data in the form of the first image which comprises the phase information in the form of at least a part of the pixel values of the first pixels may have two advantages.

Firstly, the phase information of the pairs of frequencies or the phase information of the pairs of angles, dependent on whether the first image is generated dependent on the spatial 2D-spectrum or the 2D-angle spectrum, may be used for the differentiation. Using the phase information provided by the result of the spatial Fourier transform in addition to the intensity information may provide more information as a whole for performing the differentiation of the objects. In most cases this may lead to a higher accuracy of the radar system, in particular with respect to an angle estimation of the objects with respect to the radar system.

Generally, as described above, the respective reflected radar signal of the set of reflected radar signals may result from reflections of the set of radar signals at the respective object. Due to different surface properties of the objects and/or due to different environment conditions in a vicinity the objects a different phase shift during a reflection of the set of radar signals at the respective object may occur. For example, a reflection of an electromagnetic wave at a metal plate may provoke that the elective field is phase shifted with respect to the magnetic field compared to a reflection of an electromagnetic wave at a nonmetal part. Such different phase shifts due to the reflections at the objects may be recognizable when processing the receiving signals. Hence, the different phase shifts due to the reflections may influence the phase information of the spectra. In addition, the different phase shifts due to the reflections may influence the result of the spatial Fourier transform. This may provoke that the differentiation may be performed more accurate when the phase information of the pairs of spatial frequencies is used for the differentiation in the form of including them into the first image and by that including them into the first input file. Different reflection properties of the set of radar signals at the objects may be recognizable on the basis of the phase information which are associated to the pairs of spatial frequencies.

Generally, a physical expression of physical laws relating phase shifting of radar signals to the surface properties and/or the environment conditions may be very complex and sensitive to a variation of the environment conditions. Furthermore, there may be a risk of not accounting for a relevant physical effect when expressing physical laws relating to phase shifting of radar signals by pure physical formulas. This difficulty may be circumvented by equipping the evaluation unit with the first NN. The first NN may be trained to differentiate the objects on the basis of the phase information which is associated to the pairs of spatial frequencies. In this case, the above mentioned first feature may be a feature which specifies a pattern of the phase information of the pairs of spatial frequencies. In one example, the first NN may be designed to internally build, in particular using internal weights of the first NN, a first feature vector specifying a combination of the phase information of the pairs of spatial frequencies. Following this example, the first NN may be designed to compute the first output dependent on the first feature vector, hence dependent on the phase information of the pairs of spatial frequencies. For that purpose, the first training data may comprises observations of different phase shifts of reflected training radar signals at at least two different training objects. By training the first NN with such training data the physical effects causing phase shifts of reflecting radar signals at the different training objects may be learned by the first NN. The trained first NN with its adapted values of parameters to the first training data may represent at least a part of the physical laws regarding the phase shifts of reflecting radar signals at different training objects. The first NN may be considered as a black box and the training of the first NN may be performed instead of performing experiments with respect to phase shifts of radar signals reflecting at different type of vehicles or persons at different environment conditions. Hence, the first NN may reduce the effort for building the proposed radar system which may account for phase shifts of the reflected sent radar signals for differentiating the objects.

Secondly, using the first image as the first input data may allow to use the first NN in the form of a neuronal network which is customized for image recognition. This could provoke that the first NN computes the first output with a higher accuracy. Convolutional neural networks are known for an effective pattern recognition in images. For that reason, the first NN may be in the form of a CNN in one example.

In one example, a first pre-trained neuronal network which is trained for pattern recognition in image files, e.g. a pre-trained CNN, may be retrained with the first training data in order to generate the first NN as a result of the retraining of the first pre-trained NN. In order to preserve knowledge gained during the pre-training, selected layers of neurons and their weight connections may be unchanged during the retraining. In case the first NN is a CNN, a selected set of convolutional layers and pooling layers may stay unchanged during the retraining.

In one example, the second input data may be provided in the form of an array. Elements of the array may comprise the intensity information and the phase information of the pairs of spatial frequencies or of the pairs of angles. The array may comprise at least a part of the result of the spatial Fourier transform comprising the intensity information and the phase information of the pairs of spatial frequencies or of the pairs of angles and how the intensity information and the phase information is associated to the respective pair of spatial frequencies or pair of angles. The evaluation unit may be configured to arrange information given by the result of the spatial Fourier transform in the form of the array.

In one example, the array may be structured in the form of a 1-dimensional array, i.e. in the form of a vector. This may have the advantage that a number of available second pre-trained NNs for generating the second NN may be higher compared to a situation in which the array is structured in the form of a 2-dimensional array or in the form of an image. This may be due to the fact that input files for NNs are structured in the form of vectors in most cases. Hence, the second NN may be a larger network compared to the first NN and/or may be trained on a higher amount of training data compared to the first NN. For example, the second NN may comprise more hidden layers and/or more neurons than the first NN. The second NN may be one of the second pre-trained NNs which is retrained using the second training data.

The second input data being structured in the form of the array may allow to use a wide range of pre-trained transformer-based NNs as the second pre-trained NNs. In one example, the second NN may be a transformer-based neural network, in particular a pre-trained transformer-based neural network. The transformer-based neural network may be designed to perform a self-attention and/or a cross-attention algorithm. This may have the advantage that the second output can be computed based on a transparent context between different parts of the information given by the second input data. In one example, for generating an internal value of the second NN which may represent a transparent context between a first part of the second input data and an internal vector, the second NN may be designed to compute a vector product of the first part of the second input data and the internal vector. The higher the internal value the higher may be the context between the first part of the second input data and the internal vector. The context may be transparent because the internal vector may be unchanged in the retraining and may represent a meaning in an embedding vector space of the pre-trained transformer-based NN. The embedding vector space and the internal vector may be established during a pre-training of the transformer-based NN. The transparent context may allow to interpret the second output and by that the output in an easier manner.

In one example, the first neural network may be a convolutional neural network and the second neural network may be a transformer-based neural network. In this case, the advantages of having a CNN for determining the first output on the basis of the first image and having the second NN in the form of a transformer-based NN may be combined.

In one example, the intensity information and the phase information of the respective pair of spatial frequencies may be provided by means of a complex number. The result of the spatial Fourier transform may comprise the respective complex number which is assigned to the respective pair of spatial frequencies. The respective complex number may comprise a real part and an imaginary part. In one example, the evaluation unit may be configured to compute the intensity information and the phase information of the respective pair of spatial frequencies dependent on the real part and the imaginary part of the complex number of the respective pair of spatial frequencies. In this case, the intensity information and the phase information of the respective pair of spatial frequencies may be provided indirectly by means of the complex number which is assigned to the respective pair of spatial frequencies in the result of the spatial Fourier transform. In another example, the phase information of the respective pair of spatial frequencies may be equal to the imaginary part of the complex number of the respective pair of spatial frequencies. In this case, the imaginary part is assumed to provide the phase information together with the intensity information of the respective pair of spatial frequencies in an indirect manner. In one example, the intensity information and the phase information of the respective pair of spatial frequencies may be provided indirectly by means of the real part and the imaginary part of the complex number of the respective pair of spatial frequencies. In another example, the evaluation unit may be configured to compute the intensity information of the respective pair of spatial frequencies dependent on the real part and the imaginary part of the complex number of the respective pair of spatial frequencies.

In one example, the respective set of pixel values of each first pixel, which represents the respective pair of spatial frequencies, may comprise a first pixel value representing the real part of the complex number of the respective pair of spatial frequencies, and a second pixel value representing the imaginary part of the complex number of the respective pair of spatial frequencies. This may serve as an example how the first image may comprise the phase information of the pairs of spatial frequencies indirectly as the phase information of the respective pair of spatial frequencies is unambiguously linked to a combined information provided by the real part and the imaginary part of the complex number which is assigned to the respective pair of spatial frequencies.

Using the complex numbers in the first input data in the form of the first image could enhance the accuracy, in particular the angle resolution, of the radar system. As the complex numbers provide the intensity information and the phase information of the respective pair of spatial frequencies in the form of a coupled pair, this coupled information may be used when calculating the first output of the first NN. The phase information of the pairs of spatial frequencies could provide additional information for differentiating the objects with a higher resolution, in particular with a higher angle resolution.

In another example, the respective set of pixel values of each first pixel, which represents the respective pair of spatial frequencies, may comprise the first pixel value representing the real part of the complex number of the respective pair of spatial frequencies and the second pixel value representing the imaginary part of the complex number of the respective pair of spatial frequencies and a third pixel value representing a phase value calculated dependent on the complex number of the respective pair of spatial frequencies. According to this example, the phase information provided by the respective complex number may be weighted higher as it is provided in a twofold manner; by the imaginary part in an indirect manner and by the phase value in a direct manner. This may further enhance the resolution, in particular the angle resolution, of the radar system.

The evaluation unit may be configured to compute the phase value of the complex number of the respective pair of spatial frequencies dependent on the real part and the imaginary part of the complex number of the respective pair of spatial frequencies, for example by calculating the inverse of the tangents of the imaginary part and the real part of the respective complex number. In one example, the above mentioned phase information of the respective pair of spatial frequencies may be equal to the phase value of the complex number of the respective pair of spatial frequencies.

With the respective set of pixel values comprising the respective first, second and third pixel value the first pixels of the first image may be represented by means of three channels, wherein to each channel one of the respective three pixel values, including the respective first, second and third pixel value, is associated. Representing the first image by means of three channels for each first pixel may have the advantage that the first NN may be used either in the form of a pre-trained NN customized for image recognition or in the form of a retrained pre-trained NN customized for image recognition. This may be advantageous because NNs which are customized for image recognition in most cases are trained with training images comprising three channels, for example the RGB-channels.

In a further example, the respective set of pixel values of each first pixel, which represents the respective pair of spatial frequencies, further comprises a fourth pixel value representing an absolute value of the complex number of the respective pair of spatial frequencies. In some applications, this may further enhance the resolution, in particular the angle resolution, of the radar system.

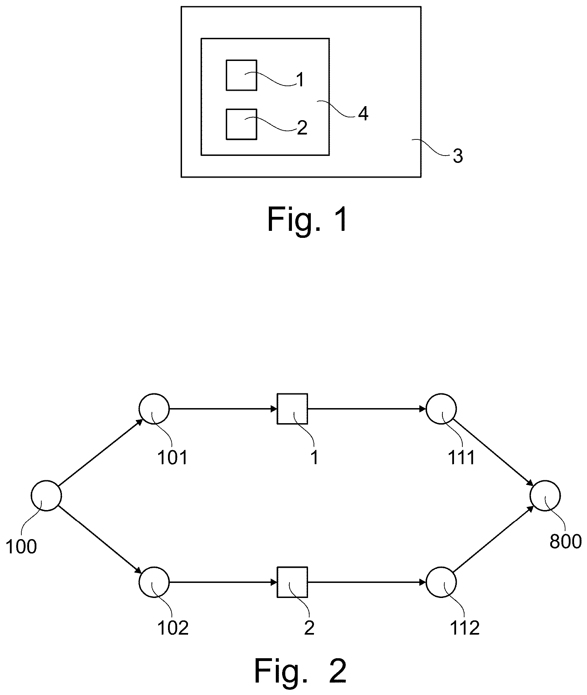

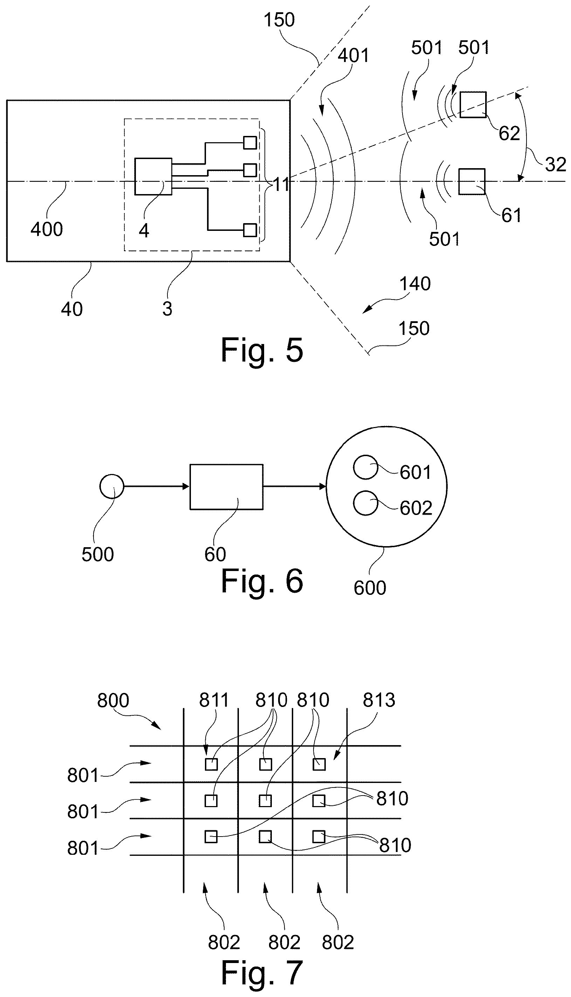

Figure 1 depicts radar system 3 for differentiating objects, for example a first object 61 and a second object 62, in an environment 140 of a vehicle 40 shown in Figure 5. The radar system 3 may comprise an evaluation unit 4. The evaluation unit 4 may comprise two differently trained neural networks, namely a first NN 1 and a second NN 2. The evaluation unit 4 may be configured to generate first input data 101 by means of a first data processing algorithm. As shown in Figure 2, the evaluation unit may be configured to generate the first input 101 data dependent on receiving signals 100 generated by means of received radar signals.

Furthermore, the evaluation unit may be configured to generate second input data 102 by means of a second data processing algorithm and dependent on the receiving signals 100. The first data processing algorithm is different from the second data processing algorithm.

Furthermore, the evaluation unit may be configured to input the first input data 101 into the first NN 1 and in response receive from the first NN 1 a first output 111. The first output 111 may indicate a differentiation between the objects.

Furthermore, the evaluation unit may be configured to input the second input data 102 into the second NN 2 and in response receive from the second NN 2 a second output 112. The second output 112 may indicate a differentiation between the objects.

Furthermore, the evaluation unit may be configured to generate an output 800 dependent on the first output 111 and the second output 112. The output 800 may indicate a differentiation between the objects.

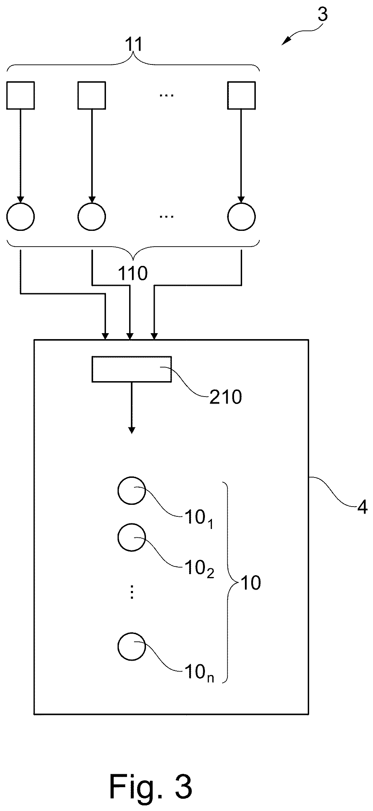

The evaluation unit 4 may be configured to generate power spectra 10 which may be considered as an example of the above mentioned power spectra, for example by means of a power spectra module 210 of the evaluation unit 4. Figure 3 exemplarily shows a first power spectrum 10₁, a second power spectrum 10₂ and an n-th power spectrum 10ₙ of the power spectra 10. The power spectra 10 may be generated dependent on the receiving signals 100 generated by means of a set of receiving antennas 11 of the radar system 3.

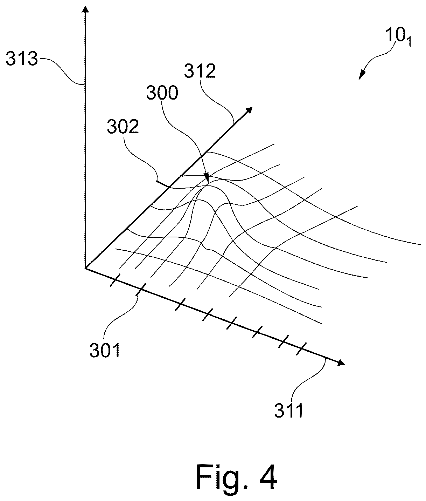

As an example, the first power spectrum 10₁ is illustrated in Figure 4. Short lines are drawn along a first dimension 311 of the first power spectrum 10₁, which symbolically represent values of first frequencies of the first power spectrum 10₁. The first frequencies may relate to distances of the objects with respect to the set of receiving antennas 11. Further short lines are drawn along a second dimension 312 of the first power spectrum 10₁, which symbolically represent values of second frequencies of the first power spectrum 10₁. The second frequencies may relate to relative velocities of the objects with respect to the set of receiving antennas 11. A third dimension 313 of the first power spectrum 10₁ may represent an intensity or a power value.

Figure 5 illustrates an application example of the radar system 3 according to which the radar system 3 may be part of the vehicle 40. In one example the radar system 3 may be arranged in the front of the vehicle 40. The environment 140 of the vehicle 40 may be a space in three dimensions between the dashed lines 150.

The radar system 3 may comprise the above mentioned set of transmitting antennas and the control unit not shown in the figures for transmitting an exemplary set of radar signals 401 dependent on the above mentioned set of control signals. The exemplary set of radar signals 401 may be an example of the above mentioned set of radar signals. The respective transmitting antenna of the set of transmitting antennas may send the respective radar signal of the set of radar signals 401 dependent on the respective control signal of the set of control signals.

The set of receiving antennas 11 may generate the receiving signals 100 in response to receiving a set of reflected radar signals 501. The set of reflected radar signals 501 may result from reflections of the set of radar signals 401 at the objects, for example at the first object 61 and at the second object 62. In one example, a first radar signal of the set of reflected radar signals 501 may result from reflections of the set of radar signals 401 at the first object 61 and a second radar signal of the set of reflected radar signals 501 may result from reflections of the set of radar signals 401 at the second object 62. The evaluation unit 4 may generate the power spectra 10 dependent on the set of reflected radar signals 501.

The control unit may be configured to perform the time-division multiplex method and/or the binary phase modulation for coding the set of control signals such that the evaluation unit 4 may be enabled to distinguish the set of reflected radar signals 501 from each other on the basis of the coding when processing the set of receiving signals 110.

The evaluation unit 4 may be designed to generate the power spectra 10 dependent on the set of control signals and the set of receiving signals 110 as described above. In one example, the evaluation unit 4 may generate the set of mixed signals and may perform the respective Fourier analysis of the respective mixed signal of the set of mixed signals for obtaining the respective power spectrum of the power spectra 10.

In one example, the evaluation unit 4 may select a pair of frequencies 300 of the first power spectrum 10₁. The selected pair of frequencies 300 may comprise a frequency 301 of the first frequencies of the first power spectrum 10₁, in the following referred to as first selected frequency 301, and a frequency 302 of the second frequencies of the first power spectrum 10₁, in the following referred to as second selected frequency 302. The selected pair of frequencies 300 may form an example of the above mentioned selected range-Doppler pair and may also be referred to as selected range-Doppler pair 300. The evaluation unit 4 may select the pair of frequencies 300 as the pair of frequencies of the first power spectrum 10₁ which comprises the highest power or intensity.

With respect to the application example of the radar system 3 shown in Figure 5, the first selected frequency 301 may represent a distance of the objects 61, 62 relative to the radar system 3 and the second selected frequency 302 may represent a relative velocity of the objects 61, 62 with respect to the radar system 3. It may be assumed that the distance of the first object 61 to the radar system 3 is similar to the distance of the second object 62 to the radar system 3. The same may be assumed for the relative velocity of the objects 61, 62.

Furthermore, the evaluation unit 4 may process the power spectra 10 and may search the selected range-Doppler pair 300 in each power spectrum of the power spectra 10. The evaluation unit 4 may select the selected range-Doppler pair 300 for each power spectrum. Each selected range-Doppler pair 300 may comprise the first selected frequency 301 and the second selected frequency 302 the respective power spectrum. The respective power spectrum may comprise a phase information of the respective selected range-Doppler pair 300. In one example, the evaluation unit 4 may write the phase information of the selected range-Doppler pair 300 of each power spectrum into a phase information file 500.

The evaluation unit 4 may be configured to perform a spatial Fourier transform on the basis of the phase information of the selected range-Doppler pair 300 of each power spectrum, for example dependent on the phase information file 500, to generate a result of the spatial Fourier transform 600. The evaluation unit 4 may be configured to perform the spatial Fourier transform dependent on the phase information file 500 and dependent on relative positions of the transmitting antennas to each other and to the respective receiving antenna of the set of receiving antennas 11.

The result of the Fourier transform 600 may comprise first spatial frequencies 601 and second spatial frequencies 602. The evaluation unit 4 may comprise a Fourier module 60 for calculating the first spatial frequencies 601 and the second spatial frequencies 602 dependent on the phase information file 500, as shown in Figure 6. The first spatial frequencies 601 may indicate possible azimuth angles of the objects with respect to a longitudinal axis 400 of the vehicle 40. The second spatial frequencies 602 may indicate possible elevation angles of the objects with respect to a horizontal plane including the longitudinal axis 400.

The result of the spatial Fourier transform 600 may be structured such that the first spatial frequencies 601 and the second spatial frequencies 602 may be associated to each other in the form of pairs of spatial frequencies. Each pair of spatial frequencies may comprise one of the first spatial frequencies 601 and one of the second spatial frequencies 602. Furthermore, the result of the spatial Fourier transform 600 may be structured such that an intensity information and a phase information may be associated to each pair of spatial frequencies.

In one example, the result of the spatial Fourier transform 600 may be in the form of a spatial 2D-spectrum. A first dimension of the spatial 2D-spectrum may be represented by the first spatial frequencies 601 and a second dimension of the spatial 2D-spectrum may be represented by the second spatial frequencies 602. The spatial 2D-spectrum may assign to each pair of spatial frequencies the respective intensity information and the phase information. The intensity information and the phase information of the respective pair of spatial frequencies may result from the Fourier transform of the phase information file 500. In one example, result of the spatial Fourier transform 600 may provide the intensity information and the phase information of the respective pair of spatial frequencies in the form of a respective complex number. The respective complex number may comprise a respective real part and a respective imaginary part. In one example, the evaluation unit 4 may be configured to transfer the spatial 2D-spectrum into the above mentioned 2D-angle spectrum. In this case, the intensity information and the phase information, for example in the form the complex number, of the respective pair of spatial frequencies may be assigned to the respective pair of angles which is associated to the respective pair of spatial frequencies.

In one example, as shown in Figure 7, the output 800 may be in the form of a matrix comprising matrix elements 810. The matrix elements 810 may each be specified by a respective row number of rows 801 of the matrix and a respective column number of columns 802 of the matrix. To each element of the matrix elements 810 a respective subregion of a set of subregions of the environment 140 of the vehicle 40 may be associated. In one example, the subregions of the set of subregions may each comprise that distance to the vehicle 40 which is specified by the first frequency of the selected range-Doppler pair 300, i.e. the first selected frequency 301. Furthermore, the subregions may be located in a respective azimuth angle range of the azimuth angle and a respective elevation angle range of the elevation angle. The azimuth angle may be measured with respect to the longitudinal axis 400. The elevation angle may be measured with respect to the horizontal plane which comprises the longitudinal axis 400. In one example, the column number of the respective element of the matrix elements 810 may specify the respective azimuth angle range in which that subregion is located which is associated to the respective element of the matrix elements 810. In addition, the row number of the respective element of the matrix elements 810 may specify the respective elevation angle range in which that subregion is located which is associated to the respective element of the matrix elements 810.

The respective element of the matrix elements 810 may comprise a respective probability value which may indicate a probability that one of the objects may be located in that subregion which is associated to the respective element of the matrix elements 810.

Considering the application example shown in Figure 5, a first element 811 and a third element 813 of the matrix elements 810 may comprise the highest probability values among the matrix elements 810. This may indicate that in a first subregion which may be associated to the first element 811 the first object 61 is located and that in a third subregion which may be associated to the third element 813 the second object 62 is located.

In one example, the first output 111 and the second output 112 may have the same format as the output 800.

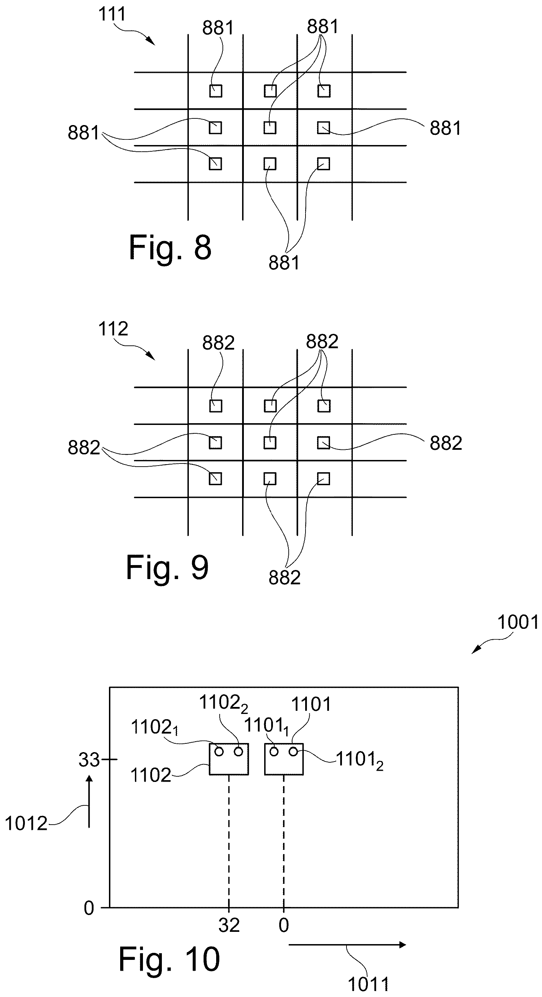

Thus, as shown in Figure 8, the first output 111 may be in the form of a first further matrix comprising first further matrix elements 881. The first further matrix elements 881 may each be specified by a respective row number of rows of the first further matrix and a respective column number of columns of the first further matrix. To each element of the first further matrix elements 881 the above mentioned respective subregion of the set of subregions of the environment 140 of the vehicle 40 may be associated. In one example, the subregions of the set of subregions may each comprise that distance to the vehicle 40 which is specified by the first frequency of the selected range-Doppler pair 300, i.e. the frequency 301 of the first frequencies. In one example, the column number of the respective element of the first further matrix elements 881 may specify the respective azimuth angle range in which that subregion is located which is associated to the respective element of the first further matrix elements 881. In addition, the row number of the respective element of the first further matrix elements 881 may specify the respective elevation angle range in which that subregion is located which is associated to the respective element of the first further matrix elements 881.

The respective element of the first further matrix elements 881 may comprise a respective first further probability value which may indicate a first further probability that one of the objects may be located in that subregion which is associated to the respective element of the first further matrix elements 881.

Similarly, as shown in Figure 9, the first output 112 may be in the form of a second further matrix comprising second further matrix elements 882. The second further matrix elements 882 may each be specified by a respective row number of rows of the second further matrix and a respective column number of columns of the second further matrix. To each element of the second further matrix elements 882 the above mentioned respective subregion of the set of subregions of the environment 140 of the vehicle 40 may be associated. In one example, the subregions of the set of subregions may each comprise that distance to the vehicle 40 which is specified by the first frequency of the selected range-Doppler pair 300, i.e. the frequency 301 of the first frequencies. In one example, the column number of the respective element of the second further matrix elements 882 may specify the respective azimuth angle range in which that subregion is located which is associated to the respective element of the second further matrix elements 882. In addition, the row number of the respective element of the second further matrix elements 882 may specify the respective elevation angle range in which that subregion is located which is associated to the respective element of the second further matrix elements 882.

The respective element of the second further matrix elements 882 may comprise a respective second further probability value which may indicate a second further probability that one of the objects may be located in that subregion which is associated to the respective element of the second further matrix elements 882.

In one example, the evaluation unit 4 may be configured to average the probability values of a respective pair of matrix elements, wherein the respective pair of matrix elements comprises one of the first further matrix elements 881 and one of the second further matrix elements 882 which each are located in similar positions in the first further matrix and the second further matrix respectively, to obtain the probability value of the respective matrix element of the matrix elements 810 having the same position in the matrix as the matrix elements of the respective pair of matrix elements in the first further matrix and the second further matrix respectively.

In the following, an example is described according to which the evaluation unit 4 may generate the first input data 101 in the form of a first image 1001 comprising pixels. Each pixel of the first image 1001 may represent one respective pair of angles of the 2D-angle spectrum. Thus, the respective pixel of the first image 1001 may represent the respective pair of spatial frequencies of the pairs of spatial frequencies indirectly by its associated respective pair of angles.

Each pixel of the first image 1001 may comprise pixel values. The pixel values of the respective pixel of the first image 1001 may represent different channels of the respective pixel. For the respective pair of angles, the pixel values of the respective pixel of the first image 1001 may depend on the intensity information and the phase information, in one example on the complex number, of the respective pair of angles.

Each pixel of the first image 1001 may be associated to a respective pair of coordinate values for rasterizing the first image 1001, each pair of coordinate values comprising a value of an x-axis 1011 and a value of a y-axis 1012 of the first image 1001. In case the respective pixel of the first image 1001 represents the respective pair of angles, values of the x-axis 1011 may represent values of the azimuth angle and values of the y-axis 1012 may represent the elevation angle. Thus, a respective pair of a value of the x-axis 1011 and a value of the y-axis 1012 may represent the respective pair of angles comprising the azimuth value being equal to that value of the x-axis 1011 and the elevation angle being equal to that value of the y-axis 1012.

According to another example, in case the respective pixel of the first image 1001 directly represents the respective pair of spatial frequencies, the values of the x-axis 1011 may represent values of the first spatial frequencies and the values of the y-axis 1012 may represent the second spatial frequencies. Thus, a respective pair of a value of the x-axis 1011 and a value of the y-axis 1012 may represent the respective pair of spatial frequencies comprising the first spatial frequency being equal to that value of the x-axis 1011 and the second spatial frequency being equal to that value of the y-axis 1012.

In one example, the evaluation unit 4 may be configured to process and/or to provide the first image 1001 in the form of a first image dataset comprising the pixel values associated to the pixels of the first image 1001. The association of each pixel of the first image 1001 to the respective pair of coordinate values may be provided by an order of the pixel values of the pixels of the first image 1001 in the first image dataset.

Figure 5 shows an exemplary application of the radar system 3 in which the first object 61 is located in a first azimuth angle of zero degrees with respect to the longitudinal axis 400 and the second object 62 is located in a second azimuth angle 32 with respect to the longitudinal axis 400. The second azimuth angle 32 may be negative. With respect to this application, the first image 1001 may comprise a first pixel 1101 indicating a location of the first object 61 and a second pixel 1102 indicating a location of the second object 62 by means of the values of the azimuth angle and an elevation angle 33 associated to the pixels 1101, 1102 as depicted by dashed lines in Figure 10. The elevation angle 33 of the objects 21, 22 is not shown in Figure 5 for sake of simplicity.

In one example, the evaluation unit 4 may be configured to determine the pixel values of the set of pixel values of the respective pixel of the first image 1001 dependent on the intensity information and the phase information of the respective pair of angles which is represented by the respective pixel of the first image 1001.

Figure 10 illustrates a first variant of the first image 1001. For producing the first variant of the first image 1001, the evaluation unit 4 may be configured to set a first pixel value of the pixel values of the respective pixel of the first image 1001 equal to the real part of the complex number of the respective pair of angles which is represented by the respective pixel of the first image 1001. In accordance with the above described example, a first pixel value 1101₁ of the first pixel 1101 may be equal to the real part of the complex number of the respective pair of angles which is represented by the first pixel 1101 of the first image 1001. Similarly, a first pixel value 1102₁ of the second pixel 1102 may be equal to the real part of the complex number of the respective pair of angles which is represented by the second pixel 1102 of the first image 1001.

Furthermore, for producing the first variant of the first image 1001, the evaluation unit 4 may be configured to set a second pixel value of the pixel values of the respective pixel of the first image 1001 equal to the imaginary part of the complex number of the respective pair of angles which is represented by the respective pixel of the first image 1001. In accordance with the above described example, a second pixel value 1101₂ of the first pixel 1101 may be equal to the imaginary part of the complex number of the respective pair of angles which is represented by the first pixel 1101 of the first image 1001. Similarly, a second pixel value 1102₂ of the second pixel 1102 may be equal to the imaginary part of the complex number of the respective pair of angles which is represented by the second pixel 1102 of the first image 1001. Hence, according to the example shown in Figure 10, each pixel of the first image 1001 may comprise two pixel values. Figure 10 only illustrates the first pixel 1001 and the second pixel 1002. It is understood that for each combination of an admissible value of the x-axis 1011 and an admissible value of the y-axis 1012 the first image 1001, and in particular the first image dataset, may comprise the respective set of pixel values of the respective pixel which are not shown for clarity reasons in Figure 10. Figure 10 may only depict the pixels of the first image 1001 which comprise the highest intensity or power according to their respective intensity information.

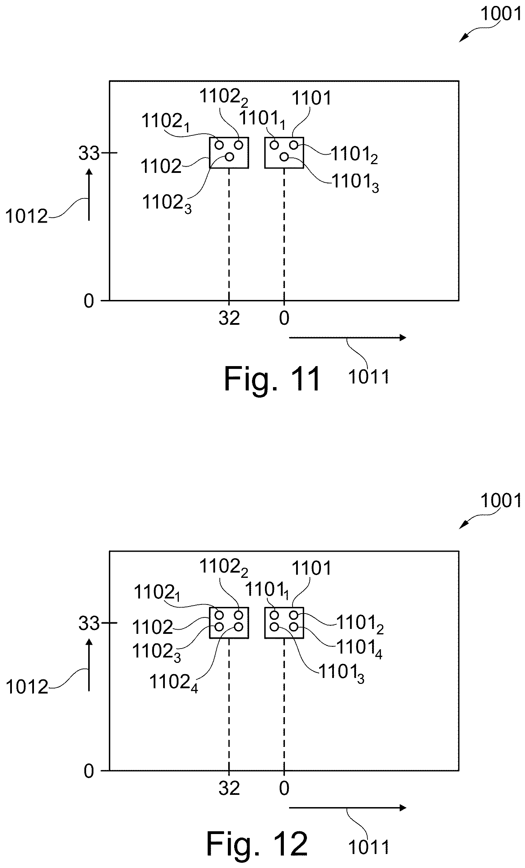

Figure 11 depicts a second variant of the first image 1001, according to which the first image 1001 may comprise three pixel values for each pixel. In addition to the first and second pixel value of each pixel of the first image 1001, as shown in Figure 10, the second variant of the first image 1001 may comprise a third pixel value of the pixel values of each pixel. For producing the second variant of the first image 1001, the evaluation unit 4 may be configured to set the third pixel value of the pixel values of the respective pixel of the first image 1001 equal to the phase information provided by the complex number of the respective pair of angles which is represented by the respective pixel of the first image 1001. In one example, the evaluation unit 4 may compute the phase information of the respective complex number dependent on the real part and the imaginary part of the respective complex number.

In accordance with the above described example, a third pixel value 1101₃ of the first pixel 1101 may be equal to the phase information of the complex number of the respective pair of angles which is represented by the first pixel 1101 of the first image 1001. Similarly, a third pixel value 1102₃ of the second pixel 1102 may be equal to the phase information of the complex number of the respective pair of angles which is represented by the second pixel 1102 of the first image 1001.

Figure 12 depicts a third variant of the first image 1001, according to which the first image 1001 may comprise four pixel values for each pixel. In addition to the first, second and third pixel value of each pixel of the first image 1001, as shown in Figure 11, the third variant of the first image 1001 may comprise a fourth pixel value of the pixel values of each pixel. For producing the third variant of the first image 1001, the evaluation unit 4 may be configured to set the fourth pixel value of the pixel values of the respective pixel of the first image 1001 equal to an absolute value of the complex number of the respective pair of angles which is represented by the respective pixel of the first image 1001. In one example, the evaluation unit 4 may compute the absolute value of the respective complex number dependent on the real part and the imaginary part of the respective complex number.

In accordance with the above described example, a fourth pixel value 1101₄ of the first pixel 1101 may be equal to the absolute value of the complex number of the respective pair of angles which is represented by the first pixel 1101 of the first image 1001. Similarly, a fourth pixel value 1102₄ of the second pixel 1102 may be equal to the absolute value of the complex number of the respective pair of angles which is represented by the second pixel 1102 of the first image 1001.

In one example, the evaluation unit 4 may be configured to use the first variant of the first image 1001 in the form of the first input data 101 and the second or third variant of the first image 1001 in the form of the second input data 102. In this case, the second or third variant of the first image 1001 may be considered as the second image mentioned above. It is also possible that the evaluation unit may be configured to use the second variant of the first image 1001 in the form of the first input data 101 and the third variant of the first image 1001 in the form of the second input data 102. In this case, the third variant of the first image 1001 may be considered as the second image mentioned above.

In another example, the evaluation unit 4 may be configured to use any of the first, second or third variant of the first image 1001 in the form of the first input data 101 and the result of the Fourier transform 600 or the raw data, for example in the form of the array, in the form of the second input data 102

Generally, the above described features of the evaluation unit 4 for generating the first input data 101 and the second input data 102 which are described in the form of "configured to generate, input, compress, differentiate, select, perform, determine, set, assemble, arrange, compute ..." may also be considered as steps of the above described method for differentiating the objects when the evaluation unit 4 is in operation mode to realize the features of the evaluation unit 4. Thus, the above described features of the evaluation unit 4 for generating the first input data 101 may be considered as exemplary steps for performing the first data processing algorithm. Similarly, the above described features of the evaluation unit 4 for generating the second input data 102 may be considered as exemplary steps for performing the second data processing algorithm.

A further possible application may involve that the evaluation unit 4 comprises a further NNs and is configured to input a further sets of input data generated by means of further data processing algorithms. In this case, the evaluation unit 4 may compute the output 800 dependent on the first output 111, the second output 112 and further outputs generated by the further NNs on the basis of the further sets of input data. The further sets of input data may each comprise the first, second or third variant of the first image 1001 or the above mentioned raw data or the result of the Fourier transform 600, for example in the form of the array.

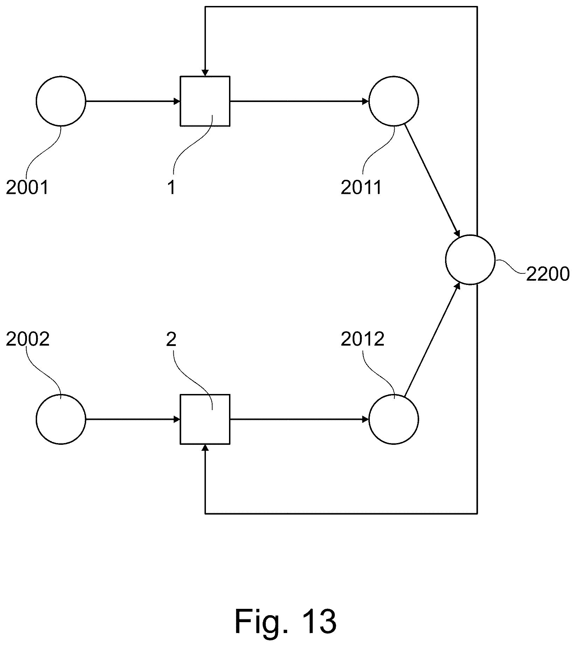

In the following an exemplary method the method for training the first NN 1 and the second NN 2 may be described. The training may comprise generating first training data 2001, as shown in Figure 13. The first training data 2001 may comprise input datasets and target datasets. The generating of the first training data 2001 may comprise generating the input datasets of the first training data 2001 dependent on training receiving signals using the first data processing algorithm.

The training receiving signals may be generated by means of training radar signals in a training session using the radar system 3. The training radar signals may comprise sets of training radar signals. The training session may comprise sending the sets of training radar signals by means of the transmitting antennas of the radar system 3. Each set of training radar signals may be sent within a respective time span by means of the transmitting antennas. Thus, the sets of training radar signals may be sent one after the other. During the respective time span of sending the respective set of training radar signals, each transmitting antenna may send a respective training radar signal of the respective set of training radar signals.

The training receiving signals may comprise sets of training receiving signals, wherein the antennas 11 may generate each set of training receiving signals within the respective time span. The antennas 11 may generate the respective set of training receiving signals in response to receiving a respective reflected set of training radar signals. The respective reflected set of training radar signal may result from reflections of the respective sent set of training radar signals at training objects in the environment 140 of the vehicle 40 within the respective time span. In one example the training objects may comprise the first object 61 and the second object 62.

In one example, each input dataset of the first training data 2001 may be generated dependent on the respective set of training receiving signals using the first data processing algorithm. In one example, the respective input dataset may comprise the format of the first image 1001 or the first image dataset, however instead of using the receiving signals 100 for generating the first image 1001, the respective set of training receiving signals may be used to generate the power spectra and the pairs of spatial frequencies in order to generate the first image 1001 or the first image dataset. Thus, in one example, the respective input dataset of the first training data 2001 may be in the form of a respective first training image, which comprises the format of the first image 1001 according to the first, second or third variant.

Furthermore, the training may comprise inputting the input datasets of the first training data 2001 into the first NN 1 and in response receiving from the first NN 1 first training output datasets 2011. In this case, for each input dataset of the first training data 2001 the first NN 1 may generate a respective output dataset of the first training output datasets 2011.

Furthermore, the training may comprise calculating a value of a first loss function dependent on the first training output datasets 2011 and the target datasets of the first training data 2001. On one example, the first loss function may be computed dependent on a deviation between the first training output datasets 2011 and the target datasets of the first training data 2001.

The first training output datasets 2011 and the target datasets of the first training data 2001 may each comprise the same format as the first output 111. In one example, probability values of matrix elements of the respective target dataset of the first training data 2001 may be determined manually. This may involve documenting relative positions of the training objects with respect to the radar system 3 in the respective time span and transferring information about these relative positions into the respective target dataset. In this case, the probability values of the matrix elements of the respective target dataset of the first training data 2001 may either have the value zero or one.

Alternatively, the probability values of the matrix elements of the respective target dataset of the first training data 2001 may be determined using a training radar system comprising a higher aperture than the radar system 3. In this case, for computing the respective target dataset of the first training data 2001, a respective training 2D-angle spectrum may be computed similarly like the above mentioned 2D-angle spectrum dependent on further training receiving signals generated by means of the training radar system. Based on the respective training 2D-angle spectrum the respective target dataset of the first training data 2001 may be computed by converting intensity values of the respective training 2D-angle spectrum into probability values of the matrix elements of the respective target dataset of the first training data 2001. In one example, the target 2D-angle spectra may comprise a higher resolution than the 2D-angle spectrum. In this case, intensity values of the target 2D-angle spectra may be projected to a lower resolution such that the target datasets may comprise the same format as the first training output datasets 2011.

Furthermore, the training may comprise generating second training data 2002. The second training data 2002 may comprise input datasets and target datasets. The generating of the second training data 2002 may comprise generating the input datasets of the second training data 2002 dependent on the training receiving signals using the second data processing algorithm.

In one example, each input dataset of the second training data 2002 may be generated dependent on the respective set of training receiving signals using the second data processing algorithm. In one example, the respective input dataset may comprise the format of the first image 1001 or of the first image dataset, however instead of using the receiving signals 100 for generating the first image 1001, the respective set of training receiving signals may be used to generate the power spectra and the pairs of spatial frequencies in order to generate the first image 1001 or the first image dataset. Thus, in one example, the respective input dataset of the second training data 2002 may be in the form of a respective second training image which comprises the format of the first image 1001 according to the first, second or third variant.

The respective input dataset of the second training data 2002 may be different to the respective input dataset of the first training data 2001, considering the respective set of training receiving signals dependent on which the respective input dataset of the first and second training data 2001, 2002 is generated. Thus, in case the input datasets may comprise the format of the first image 1001, the respective input dataset of the second training data 2002 may comprise the format of the first image 1001 according to a different variant compared to the respective input dataset of the first training data 2001. For example, the respective input dataset of the second training data 2002 may comprise the format of the first image 1001 according to the second or third variant and the respective input dataset of the first training data 2001 may comprise the format of the first image 1001 according to the first variant or vice versa.

Furthermore, the training may comprise inputting the input datasets of the second training data 2002 into the second NN 2 and in response receiving from the second NN 2 second training output datasets 2012. In this case, for each input dataset of the second training data 2002 the second NN 2 may generate a respective output dataset of the second training output datasets 2012.

Furthermore, the training may comprise calculating a value of a second loss function dependent on the second training output datasets 2012 and the target datasets of the second training data 2002. On one example, the second loss function may be computed dependent on a deviation between the second training output datasets 2012 and the target datasets of the second training data 2002.

In one example, the target datasets of the second training data 2002 may be equal to the target datasets of the first training data 2001. This, and the fact that the input datasets of the first training data 2001 and of the second training data 2002 is generated on the basis of the same training receiving signals, may provoke that the first NN 1 and the second NN 2 may learn to perform an angle estimation of the training objects based on the input data of the first training data 2001 and of the second training data 2002 respectively. As the input data of the first training data 2001 and of the second training data 2002 may already comprise data for performing the angle estimation of the training objects, the first NN 1 and the second NN 2 in the trained state may be considered as tools for increasing an accuracy of the angle estimation of the training objects compared to performing the angle estimation of the training objects based on the input data of the first training data 2001 and of the second training data 2002. In one example, the first NN 1 and the second NN 2 in the trained state may reduce sidelobes of the input data of the first training data 2001 and of the second training data 2002. As the input data of the first training data 2001 and of the second training data 2002 is different from each other, the first NN 1 and the second NN 2 may improve the accuracy of the angle estimation of the training objects in two different ways.

Generally, it may be possible that the first NN 1 and the second NN 2 are trained separately from each other. In this case, the value of the first loss function may be used for adapting values of parameters of the first NN 1. The parameters of the first NN 1 may comprise connection weights between neurons of the first NN 1 or parameters of activation functions or parameters of pooling functions of the first NN 1 in case the first NN 1 is a CNN. An adapting of the values of the parameters of the first NN 1 may be performed using machine-learning techniques such as backpropagation or further learning methods.

Similarly, the value of the second loss function may be used for adapting values of parameters of the second NN 2. The parameters of the second NN 2 may comprise connection weights between neurons of the second NN 2 or parameters of activation functions or parameters of pooling functions of the second NN 2 in case the second NN 2 is a CNN. An adapting of the values of the parameters of the second NN 2 may be performed using machine-learning techniques such as backpropagation or further learning methods.

However, in another example, the first NN 1 and the second NN 2 may be trained dependent from each other. This may provoke that a difference between the first output 111 and the second output 112 may be reduced during the application of the radar system 3. An interdependent training of the first NN 1 and the second NN 2 may involve adapting values of parameters of one of the both NNs 1, 2 dependent on a value of the loss function of the other one of the both NNs 1, 2.

According to one example, a value of a combined loss function 2200 dependent on a difference between the first training output datasets 2011 and the second training output datasets 2012 may be computed. In one example, the value of the combined loss function 2200 may be equal to a sum of differences. Each difference may be calculated as a respective difference between the respective first training output dataset generated dependent on the respective set of training receiving signals of the respective time span and the respective second training output dataset generated dependent on same respective set of training receiving signals of the same respective time span. In this example, the values of the parameters of the first NN 1 may be adapted dependent on the value of the first loss function and the value of the combined loss function, for example dependent on a sum of the first loss function and the combined loss function. Similarly, the values of the parameters of the second NN 2 may be adapted dependent on the value of the second loss function and the value of the combined loss function, for example dependent on a sum of the second loss function and the combined loss function.

It is understood that the above method for performing the differentiation between the objects 61, 62 may be performed after the first NN 1 and the second NN 2 are trained. After the training the first NN 1 and the second NN 2 are in a trained state.

It is understood that one or more of the aforementioned examples may be combined as long as the combined examples are not mutually exclusive.

## Claims

1. Radar system (3) for differentiating objects (61, 62) in an environment (140) of a vehicle (40), the radar system (3) comprising an evaluation unit (4), wherein the evaluation unit (4) comprises two differently trained neural networks (1, 2) and is configured to:
- generate first input data (101) by means of a first data processing algorithm and dependent on receiving signals (100) generated by means of received radar signals (501),
- generate second input data (102) by means of a second data processing algorithm and dependent on the receiving signals (100), wherein the first data processing algorithm is different from the second data processing algorithm,
- input the first input data (101) into a first one of the neural networks and in response receive from the first neural network (1) a first output (111), the first output (111) indicating a differentiation between the objects (61, 62),
- input the second input data (102) into a second one of the neural networks and in response receive from the second neural network (2) a second output (112), the second output (112) indicating a differentiation between the objects (61, 62),
- generate an output (800) dependent on the first output (111) and the second output (112), the output (800) indicating a differentiation between the objects (61, 62).

2. The radar system (3) according to claim 1, wherein a type of the first input data (101) is different compared to a type of the second input data (102) and the first neural network (1) and the second neural network (2) comprise a different structure.

3. The radar system (3) according to claim 1 or 2, wherein the evaluation unit (4) is configured to generate digitalized and filtered data dependent on the receiving signals (100) and to generate a 2-dimensional frequency spectrum dependent on the digitalized and filtered data, wherein a first dimension of the frequency spectrum represents first frequencies which relate to distances of the objects (61, 62) with respect to the radar system (3) and a second dimension of the frequency spectrum represents second frequencies which relate to relative velocities of the objects (61, 62) with respect to the radar system (3), and the type of the first input data (101) is designed such that the first input data (101) comprises data derived from the 2-dimensional frequency spectrum.

4. The radar system (3) according to any of the previous claims, wherein the evaluation unit (4) is configured to
- generate power spectra dependent on the receiving signals (100), the receiving signals (100) being received from a set of receiving antennas (11), wherein first frequencies of each power spectrum relate to distances of the objects (61, 62) with respect to the set of receiving antennas (11) and second frequencies of each power spectrum relate to relative velocities of the objects (61, 62) with respect to the set of receiving antennas (11),
- select a pair of frequencies (300) for each power spectrum, wherein each pair of frequencies (300) comprises the same frequency of the first frequencies and the same frequency of the second frequencies of the respective power spectrum, wherein each power spectrum comprises a phase information of the selected pair of the respective power spectrum,
- perform a spatial Fourier transform on the basis of the phase information of the selected pairs, the result of the spatial Fourier transform comprising first spatial frequencies and second spatial frequencies associated to each other in the form of pairs of spatial frequencies, wherein to each pair of spatial frequencies one of the first spatial frequencies, one of the second spatial frequencies and an intensity information and a phase information is associated,
- generate the first input data (101) in the form of a first image comprising first pixels, each first pixel representing one respective pair of spatial frequencies of the pairs of spatial frequencies and comprising a set of pixel values representing different channels of the first pixel, wherein for the respective pair of spatial frequencies, the pixel values depend on the intensity information and the phase information of the pair of spatial frequencies.

5. The radar system (3) according to claim 4, wherein the second input data (102) is provided in the form of an array and elements of the array comprise the intensity information and the phase information of the pairs of spatial frequencies.

6. The radar system (3) according to claim 4 or 5, wherein the intensity information and the phase information of the respective pair of spatial frequencies is provided by means of a complex number, the complex number comprising a real part and an imaginary part, wherein the respective set of pixel values comprises a first pixel value representing the real part of the respective complex number and a second pixel value representing the imaginary part of the respective complex number and a third pixel value representing a phase value calculated dependent on the respective complex number.

7. The radar system (3) according to claim 6, wherein the respective set of pixel values further comprises a fourth pixel value representing an absolute value of the respective complex number.

8. The radar system (3) according to any of previous claims 6-7, wherein the evaluation unit (4) is configured to
- generate the second input data (102) in the form of a second image comprising second pixels, each second pixel representing a pair of the spatial frequencies and comprising a second set of pixel values representing different channels of the pixel, the pixel values depending on the intensity information and the phase information of the respective pair of spatial frequencies, wherein the respective second set of pixel values comprises a first pixel value representing the real part of the respective complex number and a second pixel value representing the imaginary part of the respective complex number and a third pixel value representing a phase value of the respective complex number.

9. The radar system (3) according to one of the preceding claims, wherein the first neural network (1) is a convolutional neural network and/or wherein the second neural network (2) is a transformer-based neural network.

10. The radar system (3) of any of the previous claims 4-9, further comprising the receiving antennas.

11. A vehicle (40) comprising a radar system (3) according to any of the previous claims 1 to 10.

12. Method for operating a radar system (3) for differentiating objects (61, 62) in an environment (140) of a vehicle (40), the radar system (3) comprising an evaluation unit (4), wherein the evaluation unit (4) comprises two differently trained neural networks, the method comprising:
- generating first input data (101) by means of a first data processing algorithm and dependent on receiving signals (100) generated by means of received radar signals,
- generating second input data (102) by means of a second data processing algorithm and dependent on the receiving signals (100), wherein the first data processing algorithm is different from the second data processing algorithm,
- inputting the first input data (101) into a first one of the neural networks and in response receiving from the first neural network (1) a first output (111), the first output (111) indicating a differentiation between the objects (61, 62),
- inputting the second input data (102) into a second one of the neural networks and in response receiving from the second neural network (2) a second output (112), the second output (112) indicating a differentiation between the objects (61, 62),
- generating an output (800) dependent on the first output (111) and the second output (112), the output (800) indicating a differentiation between the objects (61, 62).

13. Method according to claim 12, the method further comprising training the first neural network (1) and the second neural network (2), the training comprising:
- generating first training data (2001), the first training data (2001) comprising input datasets and target datasets, the generating of the first training data (2001) comprising generating the input datasets of the first training data (2001) dependent on training receiving signals using the first data processing algorithm, the training receiving signals being generated by means of training radar signals,
- generating second training data (2002), the second training data (2002) comprising input datasets and target datasets, the generating of the second training data (2002) comprising generating the input datasets of the second training data (2002) dependent on the training receiving signals using the second data processing algorithm,
- inputting the input datasets of the first training data (2001) into the first neural network (1) and in response receiving from the first neural network (1) first training output datasets (2011),
- calculating a value of a first loss function dependent on the first training output datasets (2011) and the target datasets of the first training data (2001),
- inputting the input datasets of the second training data (2002) into the second neural network (2) and in response receiving from the second neural network (2) second training output datasets (2012),
- calculating a value of a second loss function dependent on the second training output datasets (2012) and target datasets of the second training data (2002),
- calculating a value of a combined loss function dependent on a difference between the first training output datasets (2011) and the second training output datasets (2012),
- adapting values of parameters of the first neural network (1) dependent on the value of the first loss function and the value of the combined loss function,
- adapting values of parameters of the second neural network (2) dependent on the value of the second loss function and the value of the combined loss function.

14. A computer program comprising machine executable instructions for execution by a computational system, wherein execution of the machine executable instructions causes the computational system to perform the method of claim 12 or 13.
